# FASCICULE DE BREVET EUROPEEN

(11) **EP 1 953 707 B1**
(45) Date de publication et mention de la délivrance du brevet: **19.08.2009**
(21) Numéro de dépôt: 08001508.4
(22) Date de dépôt: 28.01.2008
(51) Int. Cl.: G07C 9/00

(54) **Dispositif d'accès mains libres à un véhicule, adapté pour commander le déverrouillage d'au moins une portière du dit véhicule**
Vorrichtung zur berührungslosen Entriegelung mindestens einer Tür eines Kraftfahrzeuges
Device for hands-free access to a vehicle, adapted to control the unlocking of at least one door of said vehicle

(30) Priorité: 30.01.2007 FR 0700627
(43) Date de publication de la demande: 06.08.2008
(73) Titulaire: Continental Automotive France, 31036 Toulouse Cedex 1 (FR)
(72) Inventeur: Brillon, Alain, 31270 Villeneuve Tolosane (FR); Depont, Benoit, 31860 Labarthe-sur-Lèze (FR); Jansseune, Luc, 31810 Venerque (FR)

(56) Documents cités:
- WO-A-02/35036
- GB-A- 2 353 620
- US-A1- 2002 125 994

## Description

L'invention concerne un dispositif d'accès mains libres à un véhicule, adapté pour commander le déverrouillage d'au moins une portière du dit véhicule et tel que connu des documents WO 02/35036 A ou GB 2 353 620 A.

Les dispositifs d'accès mains libres à un véhicule comportent classiquement un boîtier portable de commande à distance, une unité centrale embarquée dans le véhicule, et des moyens de transmission, d'une part, disposés dans le dit véhicule, et d'autre part, intégrés dans le dit boîtier de commande, et adaptés pour permettre d'instaurer un dialogue entre l'unité centrale et le boîtier de commande en vue de la mise en oeuvre de procédures d'autorisation d'accès au véhicule.

Les dispositifs d'accès mains libres classiques actuels comprennent, en outre, un interrupteur adapté pour être implanté dans une poignée de portière et pour commuter d'un état passif vers un état actif lors d'un accès d'un utilisateur à la dite poignée, de façon à commander, lors de cette activation, le déclenchement d'une procédure d'identification du boîtier de commande porté par l'utilisateur et le déverrouillage de la portière.

Un des inconvénients de ces dispositifs d'accès mains libres résulte de l'obligation d'obtenir un déverrouillage de la portière avant l'actionnement total de la poignée, faute de quoi le mécanisme de fermeture de cette portière reste verrouillé, interdisant l'ouverture de la dite portière.

Cette obligation impose, en effet d'utiliser, en tant qu'interrupteurs intégrés dans les poignées, des capteurs de proximité très réactifs, tels que par exemple des capteurs capacitifs, qui s'avèrent, d'une part, d'un prix de revient relativement élevé, et d'autre part d'une relative sensibilité aux conditions environnementales : pluie, gel, champ magnétique terrestre ou environnemental...

De plus, malgré les performances des capteurs de proximité actuels, le temps imparti pour effectuer les opérations d'identification et de déverrouillage s'avère fréquemment insuffisant, de sorte que la portière ne se déverrouille pas lors de la première manoeuvre de la poignée (incident connu sous l'appellation « effet mur »). Il est nécessaire dans ce cas, de manoeuvrer une deuxième fois la poignée pour obtenir son ouverture. Ce type d'incident est généralement mal perçu par l'utilisateur.

En vue de pallier l'inconvénient relatif à « l'effet mur , une évolution a consisté à réaliser des dispositifs d'accès mains libres conçus pour permettre une identification des boîtiers de commande dés l'introduction de ces derniers dans une zone, dite zone de couverture, d'étendue prédéterminée autour des véhicules et donc avant que l'utilisateur touche ou s'approche de la poignée.

A cet effet, ces dispositifs d'accès mains libres sont programmés de façon à mettre en oeuvre une procédure d'identification consistant à commander l'émission périodique par l'unité centrale embarquée dans le véhicule d'une trame de données incorporant un préambule consistant en un code de réveil prédéfini identifiable par le boîtier de commande, après identification duquel le dit boîtier de commande est programmé pour basculer d'un état de veille vers un état actif permettant d'instaurer un dialogue avec l'unité centrale.

Selon ce concept, la procédure d'identification est donc réalisée avant l'activation de l'interrupteur intégré dans la poignée, de sorte que cette activation ne commande que la procédure de déverrouillage et non plus celle d'identification.

Toutefois, il s'avère que le temps requis pour effectuer ces procédures de verrouillage reste suffisamment important : traitement de l'information par l'unité centrale du dispositif d'accès mains libres, transmission de cette information sur le réseau multiplexé embarqué sur le véhicule, traitement de l'information par l'unité centrale générale de gestion de l'habitacle du véhicule, et temps effectif de fonctionnement de l'actionneur.

Pour cette raison, et afin de se garantir contre la survenance d'éventuels « effets mur », tous les véhicules actuels restent équipés de capteurs de proximité, et ce malgré les inconvénients inhérents à ces derniers, à savoir notamment leur coût et leur sensibilité.

La présente invention vise à pallier cet inconvénient et a pour principal objectif de fournir des dispositifs d'accès mains libres conçus pour que le temps requis pour obtenir le déverrouillage d'une portière, après activation de l'interrupteur intégré dans la poignée de portière, soit réduit de façon optimale, permettant, sans risque d'apparition « d'effet mur », d'équiper la dite poignée d'un simple interrupteur apte à être activé par contact de la main d'un utilisateur et non plus d'un détecteur de proximité onéreux.

A cet effet, l'invention vise un dispositif d'accès mains libres à un véhicule, adapté pour commander le déverrouillage d'au moins une portière du dit véhicule dotée d'une poignée et équipée d'un actionneur de déverrouillage/verrouillage et d'un circuit d'alimentation du dit actionneur :
le dit dispositif d'accès mains libres comprenant :
   - un boîtier portable de commande à distance,
   - une unité centrale embarquée dans le véhicule,
   - des moyens de transmission, d'une part disposés dans le véhicule, et d'autre part intégrés dans le boîtier de commande, et adaptés pour permettre d'instaurer un dialogue entre l'unité centrale et le boîtier de commande en vue de la mise en oeuvre de procédures d'autorisation d'accès au véhicule,
   - et un interrupteur intégré dans la poignée de la portière et adapté pour commuter d'un état passif vers un état actif lors d'un accès d'un utilisateur à la dite poignée,
et le dit dispositif d'accès mains libres étant adapté pour commander l'alimentation de l'actionneur de déverrouillage/verrouillage après validation d'une procédure d'autorisation d'accès au véhicule, et commutation de l'interrupteur vers son état actif.

Selon l'invention, ce dispositif d'accès mains libres se caractérise en ce que :
- l'unité centrale est programmée pour commander l'alimentation de l'actionneur de déverrouillage/verrouillage immédiatement après validation d'une procédure d'autorisation d'accès au véhicule,
- et l'interrupteur est électriquement intégré dans le circuit d'alimentation de l'actionneur de déverrouillage/verrouillage, de façon à maintenir ce circuit d'alimentation ouvert dans l'état passif du dit interrupteur, et à fermer le dit circuit d'alimentation dans son état actif.

Le principe de l'invention est donc de commander l'alimentation électrique de l'actionneur de déverrouillage/verrouillage immédiatement après identification d'un boîtier de commande, et de déclencher le fonctionnement effectif de cet actionneur lors de l'activation de l'interrupteur intégré dans la poignée de portière, électriquement connecté, à cet effet, dans le circuit d'alimentation du dit actionneur.

Selon ce principe, le temps requis pour obtenir le déverrouillage d'une portière, après activation d'un interrupteur intégré dans la poignée de portière, est réduit de façon optimale puisqu'il se résume au seul temps requis par l'actionneur pour réaliser le déverrouillage.

Ce temps s'avère en fait quasiment indépendant de la réactivité des interrupteurs de sorte que les poignées peuvent être équipées, sans risque d'apparition « d'effet mur », d'un simple interrupteur activable par contact de la main d'un utilisateur:
- d'un prix de revient notablement inférieur à celui des capteurs de proximité actuels,
- d'une très faible sensibilité aux conditions environnementales, garantissant une très bonne fiabilité de fonctionnement.

Selon un mode de réalisation avantageux de l'invention, le circuit d'alimentation de l'actionneur de déverrouillage/verrouillage comporte un relais connecté entre l'interrupteur et le dit actionneur de déverrouillage/verrouillage.

Un tel relais a pour premier avantage de protéger électriquement l'interrupteur. De plus, il permet de garantir le complet déverrouillage même si l'utilisateur relâche la poignée avant l'expiration du temps nécessaire à l'actionneur pour réaliser cette opération de déverrouillage.

Selon un autre mode de réalisation avantageux de l'invention, le circuit d'alimentation de l'actionneur de déverrouillage/verrouillage comporte une bascule dotée de deux entrées de connexion et d'une sortie de connexion :
- une première entrée de connexion vers laquelle est délivré un signal de commande émis par l'unité centrale,
- une seconde entrée de connexion connectée en série avec un interrupteur,
- et une sortie de connexion reliée à l'actionneur de déverrouillage/verrouillage.

De plus, l'unité centrale est avantageusement reliée au circuit d'alimentation de l'actionneur de déverrouillage/verrouillage de façon, d'une part, à recevoir un signal de fermeture lors de la commutation de l'interrupteur vers son état actif, et d'autre part, à délivrer un signal de réinitialisation à destination de la bascule, après un laps de temps prédéterminé suivant la réception du signal de fermeture.

Ces dispositions permettent de gérer le temps d'alimentation électrique de l'actionneur, et de garantir, notamment, un temps minimal d'alimentation susceptible de permettre un déverrouillage en toutes conditions (présence de gel...)

D'autres caractéristiques buts et avantages de l'invention ressortiront de la description détaillée qui suit en référence au dessin annexé qui en représente à titre d'exemple non limitatif un mode de réalisation préférentiel. Sur ce dessin, la figure unique 1 est une vue de dessus schématique d'un véhicule équipé d'un système d'accès mains libres selon l'invention représenté sous forme d'un schéma blocs fonctionnel.

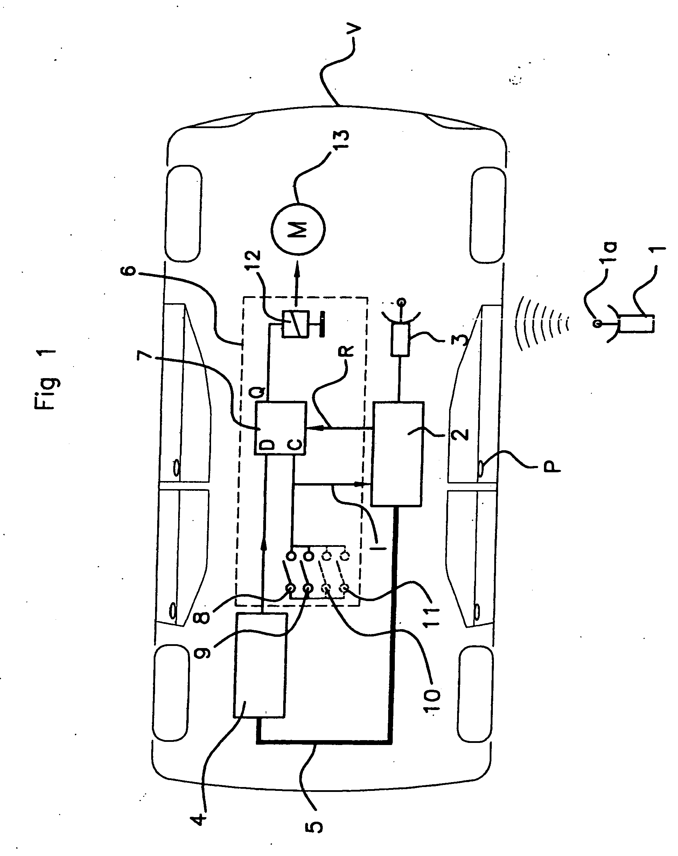

L'invention représentée à la figure 1 vise un dispositif usuellement connu sous l'appellation « dispositif d'accès mains libres » adapté pour permettre d'accéder à un véhicule V et éventuellement de démarrer ce dernier grâce à l'identification d'un boîtier portable de commande à distance 1 communément dénommé « badge électronique ».

En premier lieu, ce badge électronique 1 comprend un calculateur intégrant un récepteur basse fréquence « LF » et un émetteur radio fréquence « RF » connectés à des antennes telles que 1a.

Outre ce badge électronique 1, le dispositif d'accès mains libres comporte, embarqué dans le véhicule V, et tel que représenté à la figure 1 :
- une unité centrale spécifique 2, dite calculateur mains libres, embarquée dans le véhicule V et dotée notamment d'un émetteur basse fréquence « LF » et un récepteur radio fréquence « RF »
- des antennes émettrices telles que 3 adaptées et disposées de façon à délimiter, autour du véhicule V, une zone de couverture, d'étendue définie par les dites antennes et l'émetteur basse fréquence « LF » du calculateur mains libres 2,
- et des interrupteurs 8-11 intégrés dans la poignée P de chaque portière, et donc au nombre de quatre pour le véhicule V à quatre portières représenté à la figure 1.

En outre, le calculateur mains libres 2 de ce dispositif d'accès mains libres est relié, par un réseau multiplexé 5, à une unité centrale générale 4 de gestion de l'habitacle du véhicule, dite calculateur habitacle, notamment adaptée, dans le cadre de l'invention, pour commander un circuit 6 d'alimentation d'un moteur de déverrouillage/verrouillage 13 d'une des portières du véhicule V.

Selon l'invention, ce circuit d'alimentation 6, à l'intérieur duquel sont électriquement intégrés les quatre interrupteurs 8-11 connectés en parallèle, comprend une bascule "D" 7 dotée de deux entrées de connexion D, C et d'une sortie de connexion Q:
- une première entrée D de réception de signaux de commande délivrés par le calculateur habitacle 4,
- une seconde entrée d'horloge C connectée en série avec les interrupteurs 8-11,
- et une sortie Q reliée à un relais 12 d'alimentation du moteur de déverrouillage/verrouillage 13.

De plus, le calculateur mains libres 2 est relié au circuit d'alimentation 6 de façon, d'une part, à recevoir un signal de fermeture I lors de la fermeture d'un des interrupteurs 8-11, et d'autre part, à délivrer un signal de réinitialisation R à destination de la bascule 7, après un laps de temps prédéterminé suivant la réception du signal de fermeture.

Selon le principe de ce dispositif d'accès mains libres, et en premier lieu, le calculateur mains libres 2 est programmé pour commander l'émission par le calculateur habitacle 4, d'un signal de changement d'état de l'entrée D de la bascule 7, immédiatement après validation d'une procédure d'autorisation d'accès au véhicule V.

De plus, l'actionnement ultérieur par l'utilisateur d'une poignée P, confirmant la volonté d'ouvrir le véhicule V, entraîne la fermeture d'un des interrupteurs 8-11 et provoque le changement d'état de la seconde entrée C de la bascule 7, et par conséquent le changement d'état de la sortie Q et l'alimentation du relais 12 et du moteur 13.

Cette fermeture commande, en outre l'émission, à destination du calculateur mains libres 2, du signal de fermeture I de début de la temporisation au terme de laquelle le dit calculateur mains libres est programmé pour délivrer un signal de réinitialisation R de la bascule 7.

Selon l'invention, le temps requis pour obtenir le déverrouillage d'une portière, après activation d'un des interrupteurs 8-11 intégrés dans les poignées P des portières, est réduit de façon optimale puisqu'il se résume au seul temps requis par le moteur 13 pour réaliser le déverrouillage.

A titre d'exemple, le temps moyen requis pour obtenir ce déverrouillage selon le procédé de l'invention est de l'ordre de 60ms, alors qu'à l'heure actuelle, le temps minimal requis est de l'ordre de 150 ms.

## Revendications

1. Dispositif d'accès mains libres à un véhicule (V), adapté pour commander le déverrouillage d'au moins une portière du dit véhicule dotée d'une poignée (P) et équipée d'un actionneur de déverrouillage/verrouillage (13) et d'un circuit d'alimentation (6) du dit actionneur :
le dit dispositif d'accès mains libres comprenant :
• un boîtier portable (1) de commande à distance,
• une unité centrale (2) embarquée dans le véhicule,
• des moyens de transmission,(1a, 3) d'une part disposés dans le véhicule (V), et d'autre part intégrés dans le boîtier de commande (1), et adaptés pour permettre d'instaurer un dialogue entre l'unité centrale (2) et le boîtier de commande (1) en vue de la mise en oeuvre de procédures d'autorisation d'accès au véhicule (V),
• et un interrupteur (8-11) intégré dans la poignée (P) de la portière et adapté pour commuter d'un état passif vers un état actif lors d'un accès d'un utilisateur à la dite poignée,
le dit dispositif d'accès mains libres étant adapté pour commander l'alimentation de l'actionneur de déverrouillage/verrouillage (13) après validation d'une procédure d'autorisation d'accès au véhicule (V), et commutation de l'interrupteur (8-11) vers son état actif,
et le dit dispositif d'accès mains libres étant **caractérisé en ce que :**
• l'unité centrale (2) est programmée pour commander l'alimentation de l'actionneur de déverrouillage/verrouillage (13) immédiatement après validation d'une procédure d'autorisation d'accès au véhicule (V),
• et l'interrupteur (8-11) est électriquement intégré dans le circuit d'alimentation (6) de l'actionneur de déverrouillage/verrouillage (13), de façon à maintenir ce circuit d'alimentation (6) ouvert dans l'état passif du dit interrupteur, et à fermer le dit circuit d'alimentation dans son état actif.

2. Dispositif d'accès mains libres selon la revendication 1 **caractérisé en ce que** le circuit d'alimentation (6) de l'actionneur de déverrouillage/verrouillage (13) comporte un relais (12) connecté entre l'interrupteur (8-11) et le dit actionneur de déverrouillage/verrouillage.

3. Dispositif d'accès mains libres selon l'une des revendications 1 ou 2 **caractérisé en ce que** le circuit d'alimentation (6) de l'actionneur de déverrouillage/verrouillage (13) comporte une bascule (7) dotée de deux entrées de connexion (D, C) et d'une sortie de connexion (Q) :
• une première entrée de connexion (D) vers laquelle est délivré un signal de commande émis par l'unité centrale (2),
• une seconde entrée de connexion (C) connectée en série avec un interrupteur (8-11).
• et une sortie de connexion (Q) reliée à l'actionneur de déverrouillage/verrouillage (13).

4. Dispositif d'accès mains libres selon le revendication 3 **caractérisé en ce que** l'unité centrale (2) est reliée au circuit d'alimentation (6) de l'actionneur de déverrouillage/verrouillage (13) de façon, d'une part, à recevoir un signal de fermeture (I) lors de la commutation de l'interrupteur (8-11) vers son état actif, et d'autre part, à délivrer un signal de réinitialisation (R) à destination de la bascule (7), après un laps de temps prédéterminé suivant la réception du signal de fermeture.

## Claims

1. Hands-free access device for a vehicle (V), designed to control the unlocking of at least one door of said vehicle provided with a handle (P) and fitted with a unlocking /locking actuator (13) and a power circuit (6) of said actuator:
said hands-free access device comprising:
- a portable remote-control box (1),
- a central unit (2) on board the vehicle,
- transmission means (1a, 3) in part arranged in the vehicle (V) and in part built into the control box (1), and designed to enable the establishment of a dialogue between the central unit (2) and the control box (1) in order to implement the vehicle (V) access authorisation procedures.
- and a switch (8-11) built into the handle (P) of the door and designed to switch from a passive state to an active state when a user accesses said handle,
- said hands-free access device being designed to control the power supply of the unlocking / locking actuator (13) following validation of a vehicle (V) access authorisation procedure, and switching of the switch (8-11) to its active state,
and said hands-free access device being **characterised in that:**
- the central unit (2) is programmed to control the power supply of the unlocking / locking actuator (13) immediately following validation of a vehicle (V) access authorisation procedure,
- and the switch (8-11) is electrically integrated into the power circuit (6) of the unlocking / locking actuator (13), such as to keep this power circuit (6) open in the passive state of said switch, and to close said power circuit in its active state.

2. Hands-free access device according to claim 1, **characterised in that** the power circuit (6) of the unlocking /locking actuator (13) includes a relay (12) connected between the switch (8-11) and said unlocking / locking actuator.

3. Hands-free access device according to claim 1 or 2, **characterised in that** the power circuit (6) of the unlocking /locking actuator (13) includes a latch (7) fitted with two connection inputs (D, C) and one connection output (Q):
- a first connection input (D) to which a control signal emitted by the central unit (2) is sent,
- a second connection input (C) connected in series with a switch (8-11),
- and a connection output (Q) connected to the unlocking /locking actuator (13).

4. Hands-free access device according to claim 3, **characterised in that** the central unit (2) is connected to the power circuit (6) of the unlocking / locking actuator (13) such as, firstly, to receive a closing signal (I) when the switch (8-11) switches to its active state, and secondly to send a reset signal (R) to the latch (7), after a predetermined time following receipt of the closing signal.

## Patentansprüche

1. Vorrichtung zur berührungslosen Entriegelung mindestens einer Tür eines Kraftfahrzeuges (V), wobei die Tür mit einem Türgriff (P) versehen und mit einem Entriegelungs-/Verriegelungsstellglied (13) und einem Stromkreis für die Versorgung (6) des Stellglieds ausgestattet ist:
wobei die Vorrichtung zur berührungslosen Entriegelung Folgendes umfasst:
• ein tragbares Fernsteuerungsgehäuse (1),
• eine Zentraleinheit (2), die in das Kraftfahrzeug eingebaut ist,
• Übertragungsmittel (la, 3), die einerseits im Kraftfahrzeug (V) angeordnet und andererseits im Fernsteuerungsgehäuse (1) integriert und angepasst sind, um den Aufbau eines Dialogs zwischen der Zentraleinheit (2) und dem Fernsteuerungsgehäuse (1) im Hinblick auf die Umsetzung von Verfahren für die Genehmigung des Zugriffs auf das Kraftfahrzeug (V) zu ermöglichen,
• und einen Schalter (8-11), der in den Türgriff (P) integriert und angepasst ist, um bei einem Zugriff eines Benutzers auf den Türgriff von einem passiven Zustand auf einen aktiven Zustand umzuschalten,
wobei die Vorrichtung zur berührungslosen Entriegelung angepasst ist, um die Versorgung des Entriegelungs-/Verriegelungsstellglieds (13) nach Validieren eines Verfahrens für die Genehmigung des Zugriffs auf das Kraftfahrzeug (V) und Umschalten des Schalters (8-11) auf seinen aktiven Zustand zu steuern,
und wobei die Vorrichtung zur berührungslosen Entriegelung **dadurch gekennzeichnet ist, dass**:
• die Zentraleinheit (2) programmiert ist, um die Versorgung des Entriegelungs-/Verriegelungsstellglieds (13) unmittelbar nach Validieren eines Verfahrens für die Genehmigung des Zugriffs auf das Kraftfahrzeug (V) zu steuern,
• und der Schalter (8-11) in den Stromkreis für die Versorgung (6) des Entriegelungs-/Verriegelungsstellglieds (13) elektrisch integriert ist, so dass dieser Versorgungsstromkreis (6) im passiven Zustand des Schalters offen gehalten wird und der Versorgungsstromkreis in seinem aktiven Zustand geschlossen wird.

2. Vorrichtung zur berührungslosen Entriegelung nach Anspruch 1, **dadurch gekennzeichnet, dass** der Stromkreis für die Versorgung (6) des Entriegelungs-/Verriegelungsstellglieds (13) ein Relais (12) umfasst, das zwischen Schalter (8-11) und Entriegelungs-/Verriegelungsstellglied geschaltet ist.

3. Vorrichtung zur berührungslosen Entriegelung nach einem der Ansprüche 1 oder 2, **dadurch gekennzeichnet, dass** der Stromkreis für die Versorgung (6) des Entriegelungs-/Verriegelungsstellglieds (13) eine Kippschaltung (7) umfasst, die mit zwei Schalteingängen (D, C) und einem Schaltausgang (Q) versehen ist:
• ein erster Schalteingang (D), an welchen ein Steuersignal ausgegeben wird, das von der Zentraleinheit (2) ausgesandt wird,
• ein zweiter Schalteingang (C), der mit einem Schalter (8-11) in Serie geschaltet ist,
• und ein Schaltausgang (Q), der mit dem Entriegelungs-/Verriegelungsstellglied (13) verbunden ist.

4. Vorrichtung zur berührungslosen Entriegelung nach Anspruch 3, **dadurch gekennzeichnet, dass** die Zentraleinheit (2) mit dem Stromkreis für die Versorgung (6) des Entriegelungs-/Verriegelungsstellglieds (13) verbunden ist, so dass sie einerseits beim Umschalten des Schalters (8-11) auf seinen aktiven Zustand ein Schließsignal (I) empfängt, und andererseits nach einem vorausbestimmten Zeitraum nach Empfang des Schließsignals ein Reinitialisierungssignal (R) an die Kippschaltung (7) ausgibt.
